# EUROPÄISCHE PATENTSCHRIFT

(11) **EP 1 036 965 B1**
(45) Veröffentlichungstag und Bekanntmachung des Hinweises auf die Patenterteilung: **10.12.2003**
(21) Anmeldenummer: 00104293.6
(22) Anmeldetag: 01.03.2000
(51) Int. Cl.: F16K 31/10, F15B 13/044

(54) **Ventilverband**
Valve arrangement
Arrangement de soupapes

(30) Priorität: 18.03.1999 DE 29905011 U
(43) Veröffentlichungstag der Anmeldung: 20.09.2000
(73) Patentinhaber: HAWE Hydraulik GmbH & Co. KG, 81673 München (DE)
(72) Erfinder: Heusser, Martin, Dipl.-Ing., 81245 München (DE)
(74) Vertreter: Grünecker, Kinkeldey, Stockmair & Schwanhäusser Anwaltssozietät

(56) Entgegenhaltungen:
- DE-A- 2 321 857
- DE-B- 1 085 736
- FR-A- 990 138
- US-A- 2 570 450

## Beschreibung

Die Erfindung betrifft einen Ventilverband, insbesondere ein hydraulisches Zwillingsventil, gemäß dem Oberbegriff des Anspruchs 1.

In einem solchen Ventilverband werden die mindestens zwei parallelen Ventileinheiten mittels des Betätigungselementes gemeinsam beispielsweise aus einer Absperrstellung in eine Durchgangsstellung verstellt. An dem Betätigungselement greift beispielsweise über einen den Betätiger bildenden Anker ein Schaltmagnet an. Die Sitzventil-Einheiten können herstellungsbedingt oder aufgrund unterschiedlicher Druckverhältnisse voneinander verschiedene Bewegungswiderstände erzeugen. Damit die Ventileinheiten dennoch im wesentlichen gleichzeitig verstellt werden, ist man in der Praxis bisher davon ausgegangen, dass das gemeinsame Betätigungselement einer Führung bedarf, mit der es sich über seinen Hubweg parallel zu sich selbst bewegt. In der Praxis ist es bekannt, das Betätigungselement waagebalkenartig oder pilzförmig auszubilden und linear zu führen oder mit dem zentral angeordneten Betätiger so zu verbinden, dass dieser für die Parallelführung des Betätigungselementes sorgt. Dies ist baulich aufwendig. Jegliche Führung des Betätigungselements erzeugt entweder einen zusätzlichen Bewegungswiderstand oder erhebliche Seitenkräfte für den Betätiger (Verklemmungsgefahr und Verschleiß).

Bei einem Ventilverband der hier interessierenden Gattung gemäß DE 10 85 736 B, Fig. 5, sind für jede Ventileinheit zwei definierte Endstellungen des Ventilelements vorhanden. Diese Endstellungen sind für die korrekte Lage des Betätigungselementes in der nicht betätigten und in der betätigten Stellung des Ventilverbandes verantwortlich. Funktionsbedingt werden die Ventilelemente mechanisch zusätzlich unerwünscht belastet, um das Betätigungselement am Betätiger zum Kippen zu zwingen. Dies kann zusätzlichen Verschleiß hervorrufen.

Weiterer Stand der Technik ist enthalten in US-A-2 476 519, Fig. 2; FR-A-23 67 972, Fig. 3; DE-U-91 09 976; DE-A-23 21 857; FR-A-990 138, US-A-2 570 450.

Der Erfindung liegt die Aufgabe zugrunde, einen Ventilverband der eingangs genannten Art zu schaffen, der bezüglich der Betätigung der Ventileinheiten baulich vereinfacht ist und bei dem gleichmäßige und geringe Betätigungskräfte mit verringerter Verklemmungsgefahr und geringem Verschleiß erzielbar sind.

Die gestellte Aufgabe wird mit den Merkmalen des Anspruchs 1 gelöst.

Sind die Bewegungswiderstände der Ventileinheiten deutlich verschieden, dann wird zunächst die Einheit mit dem geringsten Bewegungswiderstand verstellt, wobei sich das Betätigungselement schrägstellt. Sobald jedoch der Ausrichtanschlag für das Betätigungselement wirksam wird, wird die weitere oder werden die weiteren Ventileinheiten ebenfalls betätigt, so dass am Ende des Hubwegs des Betätigungselementes über das an seinem Ausrichtanschlag abgefangene Betätigungselement alle Ventileinheiten korrekt verstellt sind. Die in Kauf zu nehmende Verzögerung der Ventilbetätigung ist unerheblich. Es reicht eine relativ geringe Betätigungskraft aus, weil die Ventileinheiten nacheinander betätigt werden und für die Ventileinheit mit dem größten Bewegungswiderstand ein günstiger Hebelarm des am Ausrichtanschlag abgefangenen Betätigungselementes nutzbar ist. Bei der Rückstellung der Ventileinheiten ist die lose Verbindung zwischen dem Betätigungselement und dem Betätiger und auch den Ventilgliedern ohne Nachteil, weil die Federbelastungen der Ventilglieder die ordnungsgemäßen Positionen in den Ventileinheiten und des Betätigungselements herstellen.

Zweckmäßig ist der Ausrichtanschlag in einem das Betätigungselement aufnehmenden Gehäuse oder an den Ventileinheiten bzw. deren Gehäusen vorgesehen. Letztendlich kommt es darauf an, dass das Betätigungselement selbst nach Betätigung wenigstens einer Ventileinheit am Ausrichtanschlag abgefangen wird und die weiteren Ventileinheiten verstellt. Die gelenkige Kopplung und der Ausrichtanschlag sind besonders zweckmäßig bei einem Zwillingsventil mit zwei parallelen, in ventilseitig nicht konstruktiv begrenzte Öffnungsstellungen verstellbaren Sitzventil-Einheiten, können jedoch auch bei Ventilverbänden mit mehr als zwei parallelen Ventileinheiten eingesetzt werden. Durch die Beseitigung einer Führung für das Betätigungselement während dessen Hubwegs werden nicht nur zusätzliche Bewegungswiderstände vermieden, sondem auch seitliche Kräfte am Betätiger und an Elementen, die die Ventilglieder mit dem Betätigungselement koppeln.

Mit einer Anschlagfläche werden die Betätigungskräfte großflächig übertragen. Zudem entsteht bereits durch den flächigen Kontakt in der Kupplung eine gewisse Ausrichtwirkung, so dass das Betätigungselement geringfügig unterschiedliche Bewegungswiderstände der Ventileinheiten selbsttätig ausgleicht und sich im wesentlichen parallel zu sich selbst bewegt.

In der Vertiefung wird eine lose Zentrierung der beiden Komponenten erzeugt, ohne eine ausgeprägte Führung vorzunehmen. Das Betätigungselement und der Betätiger können sich an die kinematischen Verhältnisse anpassen.

Der Ausrichtanschlag sollte eine speziell orientierte Fläche sein, an der sich das Betätigungselement unter dem Beaufschlagungsdruck des Betätigers selbsttätig so ausrichtet, dass alle Ventileinheiten verstellt werden.

Alternativ können mehrere Auflagestellen gemeinsam als Ausrichtanschlag dienen.

Zweckmäßig bildet der Boden einer Kammer in dem das Betätigungselement aufnehmenden Gehäuse den Ausrichtanschlag oder ist der Ausrichtanschlag an diesem Boden vorgesehen.

Zwecks sauberer Ausrichtung sollte auch das Betätigungselement wenigstens eine Gegenfläche oder mehrere Gegenauflagen aufweisen, mit denen das Betätigungselement mit dem Ausrichtanschlag zusammenwirkt.

Übertragungsstößel, die die Bewegung des Betätigungselementes auf die Ventitglieder bringen, arbeiten mit dem Ausrichtanschlag zusammen, so dass sich das Betätigungselement indirekt an den Übertragungsstößeln ausrichtet.

Das Betätigungselement wird auf baulich einfache Weise positioniert, wenn die Übertragungsstößel in Sackbohrungen des Betätigungselementes eingreifen. Allerdings sollte ein radiales oder seitliches Spiel vorgesehen sein, damit das Betätigungselement keine Kippkräfte auf die Übertragungsstößel aufbringt

Anhand der Zeichnung werden Ausführungsformen des Erfindungsgegenstandes erläutert. Es zeigen:
- Fig. 1: ein Blockschaltbild einer hydraulischen Steuervorrichtung mit mehreren Ventilverbänden,
- Fig. 2 + 3: schematisch mehrere Operationsstellungen bei einem als Zwillingsventil ausgebildeten Ventilverband, und
- Fig. 4: einen Vertikalschnitt durch ein magnetbetätigtes Zwillingsventil in nicht betätigter Kondition.

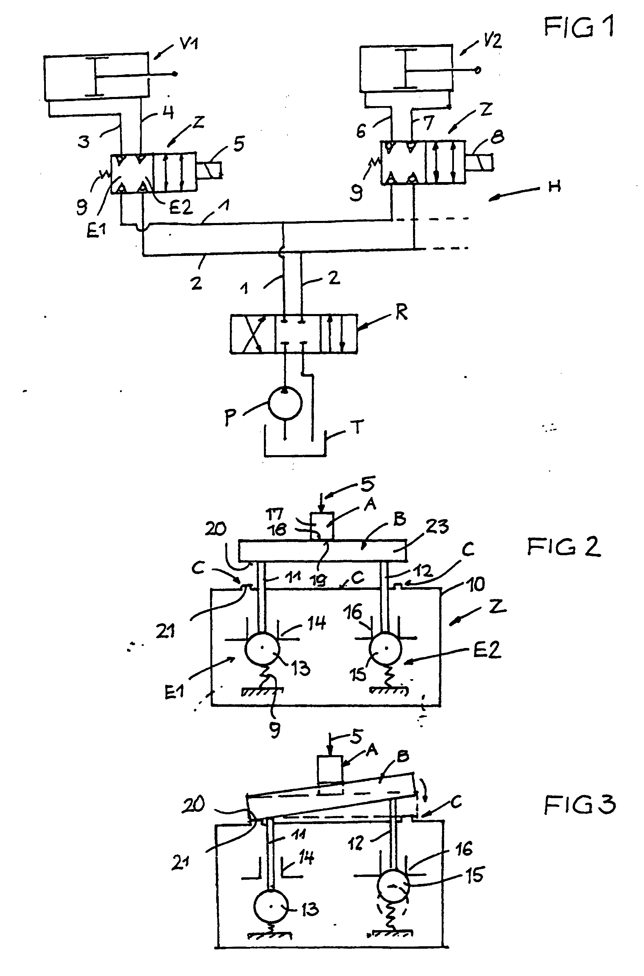

In einer hydraulischen Steuervorrichtung H gemäß Fig. 1 ist zwei Verbrauchern V1 und V2 eine gemeinsame Druckquelle P mit einem Tank T zugeordnet. Zur Richtungssteuerung jedes Verbrauchers V1, V2 ist ein Richtungssteuerventil R vorgesehen, das sich aus der gezeigten Neutralstellung in zwei Steuerstellungen bringen lässt, in denen entweder die Leitung 1 mit der Druckquelle P und gleichzeitig die Leitung 2 mit dem Tank T oder die Leitung 2 mit der Druckquelle P und die Leitung 1 mit dem Tank T verbunden ist. Um jeden Verbraucher V1, V2 für sich oder beide Verbraucher V1, V2 gemeinsam in der durch das Richtungssteuerventil R eingestellten Richtung bewegen zu können, sind zwei Ventilverbände in Form jeweils eines Zwillingsventils Z vorgesehen. Das eine Zwillingsventil Z ist zwischen den Leitungen 1, 2 und Leitungen 3, 4 des Verbrauchers V1 eingeordnet, während das andere Zwillingsventil Z zwischen den Leitungen 1, 2 und Leitungen 6, 7 des anderen Verbrauches V2 eingeordnet ist. Jedes Zwillingsventil Z wird bei dieser Ausführungsform durch einen Schaltmagneten 5 betätigt (denkbar ist aber auch eine hydraulische, pneumatische, manuelle oder elektromotorische Betätigung anstelle des Schaltmagneten 5).

Jedes Zwillingsventil enthält zwei Ventileinheiten E1, E2, zweckmäßigerweise Sitzventileinheiten, die durch Federkraft 9 in die gezeigte Absperrstellung beaufschlagt werden, und durch den Schaltmagneten 5 bei dessen Erregung in Durchgangsstellungen bringbar sind. Das zweite Zwillingsventil Z wird durch einen anderen Schaltmagneten 8 verstellt. Es könnten auch mehr als zwei Ventileinheiten zu einer gemeinsamen Betätigung vorgesehen sein.

Jeder Verbraucher V1, V2 wird nur dann in der durch im Richtungssteuerventil R gewählten Richtung bewegt, wenn sein ihm zugeordnetes Zwillingsventil aus der gezeigten Absperrstellung in die Durchgangsstellung schaltet. Dann überwacht entweder die Ventileinheit E1 den Zustrom und gleichzeitig die Ventileinheit E2 den Rückstrom, oder umgekehrt, entsprechend der Einstellung des Richtungssteuerventils R. Derartige hydraulische Steuervorrichtungen H sind seit Jahrzehnten bekannt.

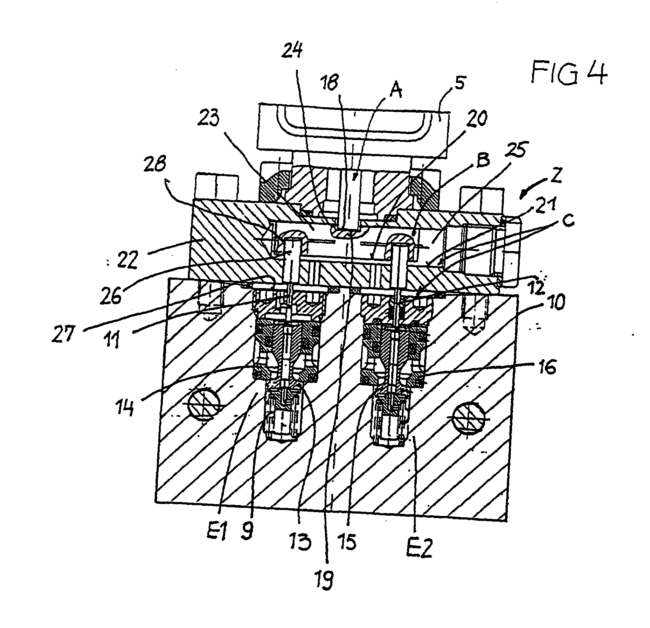

Die Fig. 2 und 3 verdeutlichen die Operation des Zwillingsventils Z, beispielsweise des in Fig. 1 linken Zwillingsventils Z. In einem gemeinsamen Gehäuse 10 (oder zwei miteinander verbundenen Gehäusen) ist jeweils ein Ventilsitz 14, 16 vorgesehen, denen ein Ventilglied 13, 15 zugeordnet ist, das jeweils von einer Ventilfeder 9 in Schließrichtung zum Ventilsitz beaufschlagt wird. Aus dem Gehäuse 10 herausgeführte Stößel 11, 12 dienen zum Verstellen der Ventilglieder 13, 15.

Der beispielsweise in Fig. 1 gezeigte Schaltmagnet 5 greift an einem Betätiger A an (beispielsweise der Armatur des Schaltmagneten), der als Stift 17 mit einer senkrecht zu seiner Bewegungsrichtung liegenden Gegenfläche 18 ausgebildet ist. Der Betätiger A arbeitet mit einem waagebalkenartigen oder scheibenförmigen Betätigungselement B zusammen, das eine in der gezeigten, nicht betätigten Stellung zur Gegenfläche 18 parallele Widerlagerfläche 19 aufweist. Zwischen dem Betätiger A und dem Betätigungselement B wird auf diese Weise eine gelenkige Kupplung geschaffen. Mit seiner Unterseite 20 beaufschlagt das Betätigungselement B, beispielsweise ein Stab 23, die Stößel 11, 12, die im Gehäuse 10 abgedichtet beweglich geführt sind.

Am Gehäuse 10 ist ein Ausrichtanschlag C für das Betätigungselement B bzw. dessen Unterseite 20 vorgesehen, der entweder durch die Oberfläche des Gehäuses 10 oder, wie gezeigt, durch beabstandete Flächen 21 definiert wird. Die Ventilglieder 13, 15 werden vom Betätigungselement B nur von ihren Sitzen 14, 16 abgehoben und z.B. ohne Hubbegrenzung in von den Ventilfedern 9 eingestellten Offenstellungen positioniert.

Aufgabe des Ausrichtanschlages ist es, das gegebenenfalls bei einer Beaufschlagung durch den Betätiger A kippende Betätigungselement B bei Anlage so auszurichten, dass dennoch sämtliche Ventileinheiten E1, E2 ordnungsgemäß verstellt werden. Dies sei anhand Fig. 3 erklärt.

Unter der durch den Schaltmagneten 5 aufgebrachten Kraft wird durch das Betätigungselement B zunächst das Ventilglied 13 von seinem Sitz 14 abgehoben und gegen die Kraft seiner Ventilfeder verstellt, während das andere Ventilglied 15, beispielsweise aufgrund höheren anstehenden Drucks oder eines höheren Bewegungswiderstandes, zunächst noch an seinem Ventilsitz 16 bleibt. Das kippende Betätigungselement B gelangt an die Fläche 21 des Ausrichtanschlags C und wird dann in die gestrichelte Lage gebracht, in der es satt an dem Ausrichtanschlag C anliegt und auch das zweite Ventilglied 15 in die gestrichelte Position und damit ordnungsgemäß verstellt hat. Wie gezeigt, kann das Betätigungselement sowohl relativ zum Betätiger A als auch relativ zu den Stößeln 11, 12 kippen, ohne auf diese Komponenten nennenswerte seitliche Kräfte auszuüben.

Für die Rückstellung der Ventileinheiten E1, E2 sind die Ventilfedern 9 verantwortlich, die das Betätigungselement B wieder in die in Fig. 2 gezeigte Position zurückbringen.

In Fig. 4 ist eine konstruktiv durchgebildete Ausführungsform des Zwillingsventils Z der Fig. 1 bis 3 gezeigt. Unterschiedlich ist, dass zusätzlich zu den in das Gehäuse 10 eindringenden Ventilstößeln 11, 12 Übertragungsstößel 26 vorgesehen sind, deren Durchmesser größer ist als der Durchmesser der Ventilstößel 11, 12. Femer ist das Betätigungselement B in einem auf dem Gehäuse 10 festgelegten Gehäuse 22 in einer Kammer 25 untergebracht, in die der Betätiger A (die Armatur des Schaltmagneten 5) eintaucht. Das Betätigungselement B weist oberseitig eine in etwa mittige Vertiefung 24 auf, deren Grund die Widedagerfläche 19 für die Gegenfläche 18 des Betätigers A bildet und die den Betätiger A mit seitlichem Spiel umfasst, um die erwähnte gelenkige Kupplung herzustellen. Die beiden Übertragungsstößel 26 tauchen in Sackbohrungen 28 in der Unterseite 20 ein, zweckmäßigerweise ebenfalls mit einem seitlichen Spiel. Die Übertragungsstößel 26 sind im Gehäuse 22 verschiebbar geführt und auf die Ventilstößel 11, 12 ausgerichtet.

Bei der Ausführungsform der Fig. 4 ist einer von zwei verschiedenen Ausrichtanschlägen C denkbar. Entweder bildet die Bodenfläche 21 der Kammer 25 des Gehäuses 22 den Ausrichtanschlag C für die Unterseite 20 des Betätigungselementes. Altemativ können jedoch auch die Übertragungsstößel 26 mit den Flächen 27 des Gehäuses 10 bzw. der Ventileinheiten E1, E2 zusammenarbeiten, um das gekippte Betätigungselement B wie in Fig. 3 in die waagrechte Lage auszurichten, um alle Ventileinheiten E1, E2 zu betätigen.

Bei den gezeigten Ausführungsformen sind stumpfe, jedoch flächige, Kopplungen zwischen dem Betätiger A und dem Betätigungselement B und auch dem Betätigungselement B und den Stößeln 11, 12 oder 26 gezeigt In Fig. 4 haben die Sackbohrungen 28, in die die geführten Übertragungsstößel eintauchen, zusätzlich die Aufgabe, das Betätigungselement B zu positionieren.

## Patentansprüche

1. Ventilverband, insbesondere hydraulisches Zwillingsventil, mit mindestens zwei parallelen Schwarz/Weiß-Sitzventileinheiten (E1, E2), deren jede ein gegen Federkraft (9) relativ zu einem Sitz (14, 16) verstellbares Ventilglied (13, 15) enthält, wobei für die Ventilglieder der Ventileinheiten ein gemeinsames, in etwa mittig durch einen Betätiger (A) über eine in Beaufschlagungsrichtung wirksame, gelenkige Kupplung beaufschlagbares, waagebalkenartiges Betätigungselement (B) vorgesehen ist, **dadurch gekennzeichnet, dass** für das Betätigungselement ein stationärer Ausrichtanschlag (C) zur ordnungsgemäßen Verstellung der Ventileinbeiten vorgesehen ist.

2. Ventilverband nach Anspruch 1, **dadurch gekennzeichnet, dass** der Ausrichtanschlag (C) an den Ventileinheiten (E1, E2) oder in einem das Betätigungselement (B) enthaltenden Gehäuse (22) vorgesehen ist.

3. Ventilverband nach Anspruch 1, **dadurch gekennzeichnet, dass** am Betätiger (A) eine senkrecht zu seiner Hubrichtung orientierte Anschlagfläche (18) und am Betätigungselement (B) eine - in nicht betätigter Position des Betätigungselements, zur Anschlagfläche (18) parallele Widerlagerfläche (19) vorgesehen sind.

4. Ventilverband nach Anspruch 3, **dadurch gekennzeichnet, dass** die Widerlagerfläche (19) des Betätigungselements (B) vom Grund einer Vertiefung (24) gebildet wird, in die der Betätiger (A) mit seitlichem Spiel eintaucht.

5. Ventilverband nach Anspruch 1, **dadurch gekennzeichnet, dass** der Ausrichtanschlag (C) wenigstens eine senkrecht zur Bewegungsrichtung der Schließglieder (13, 15) ausgerichtete Fläche (21) aufweist

6. Ventilverband nach Anspruch 1, **dadurch gekennzeichnet, dass** der Ausrichtanschlag (C) aus mehreren beabstandeten, vorzugsweise flächigen, Auflagestellen besteht.

7. Ventilverband nach Anspruch 2, **dadurch gekennzeichnet, dass** das Gehäuse (22) des Betätigungselements (B) eine Kammer (25) aufweist, deren Boden (21) den direkt vom Betätigungselement (B) kontaktierbaren Ausrichtanschlag (C) bildet oder diesen ausweist.

8. Ventilverband nach wenigstens einem der vorhergehenden Ansprüche, **dadurch gekennzeichnet, dass** das Betätigungselement (B) zur Zusammenarbeit mit dem Ausrichtanschlag (C) wenigstens eine Gegenfläche (20) oder mehrere Gegenauflagen aufweist.

9. Ventilverband nach Anspruch 1, **dadurch gekennzeichnet, dass** zwischen dem Betätigungselement und den Ventilgliedern (13, 15) Übertragungsstößel (26) vorgesehen sind, und dass die Übertragungsstößel (26) auf den an den Ventileinheiten (E1, E2) oder deren Gehäusen vorgesehenen flächigen Ausrichtanschlag (C) ausgerichtet sind.

10. Ventilverband nach Anspruch 9, **dadurch gekennzeichnet, dass** die Übertragungsstößel (26) mit seitlichem Spiel in Sackbohrungen (28) des Betätigungselements (B) eingreifen.

## Claims

1. Valve assembly, in particular hydraulic twin valve, having at least two parallel black/white seat valve units (E1, E2), each of which contains a valve element (13, 15) which can be adjusted relative to a seat (14, 16) counter to spring force (9), a common, balance-arm-like actuating element (B) which is acted upon approximately centrally by an actuator (A) via an articulated coupling which is effective in the direction of action being provided for the valve elements of the valve units, **characterized in that** a stationary aligning stop (C) for the correct adjustment of the valve units is provided for the actuating element.

2. Valve assembly according to Claim 1, **characterized in that** the aligning stop (C) is provided on the valve units (E1, E2) or in a housing (22) containing the actuating element (B).

3. Valve assembly according to Claim 1, **characterized in that** a stop surface (18) which is orientated perpendicularly to the lifting direction of the actuator (A) is provided on the said actuator (A) and an abutment surface (19) which is parallel to the stop surface (18) - in the non-actuated position of the actuating element is provided on the actuating element (B).

4. Valve assembly according to Claim 3, **characterized in that** the abutment surface (19) of the actuating element (B) is formed by the base of a depression (24) into which the actuator (A) dips with lateral play.

5. valve assembly according to Claim 1, **characterized in that** the aligning stop (C) has at least one surface (21) which is aligned perpendicular to the direction of movement of the closing elements (13, 15).

6. Valve assembly according to Claim 1, **characterized in that** the aligning stop (C) comprises a plurality of spaced-apart, preferably sheet-like, supporting points.

7. Valve assembly according to Claim 2, **characterized in that** the housing (22) of the actuating element (B) has a chamber (25), the bottom (21) of which forms the aligning stop (C), which can be contacted directly by the actuating element (B), or has the said aligning stop.

8. valve assembly according to at least one of the preceding claims, **characterized in that** the actuating element (B) has at least one mating surface (20) or a plurality of mating supports for interaction with the aligning stop (C).

9. Valve assembly according to Claim 1, **characterized in that** transmission tappets (26) are provided between the actuating element and the valve elements (13, 15), and **in that** the transmission tappets (26) are aligned with the sheet-like aligning stop (C) which is provided on the valve units (E1, E2) or on the housings thereof.

10. Valve assembly according to Claim 9, **characterized in that** the transmission tappets (26) engage with lateral play in blind holes (28) of the actuating element (B).

## Revendications

1. Arrangement de soupapes, en particulier soupape jumelée hydraulique, comprenant au moins deux unités de soupape à siège tout ou rien (E1, E2) parallèles, dont chacune comporte un organe de soupape (13, 15) mobile par rapport à un siège (14, 16) contre une force de ressort (9), un élément d'actionnement commun (B) en forme de fléau, pouvant être sollicité à peu près au centre par un actionneur (A) par l'intermédiaire d'un accouplement actif dans la direction de sollicitation, étant prévu pour les organes de soupape des unités de soupape, **caractérisé en ce qu'**une butée d'alignement stationnaire (C) pour l'élément d'actionnement est prévue pour le déplacement conforme des unités de soupape.

2. Arrangement de soupapes suivant la revendication 1, **caractérisé en ce que** la butée d'alignement (C) est prévue sur les unités de soupape (E1, E2) ou dans un corps (22) contenant l'élément d'actionnement (B).

3. Arrangement de soupapes suivant la revendication 1, **caractérisé en ce que** sont prévues sur l'actionneur (A) une surface de butée (18) orientée perpendiculairement à sa direction de course, et sur l'élément d'actionnement (B) une surface de contre-appui (19) parallèle à la surface de butée (18) dans la position non actionnée de l'élément d'actionnement (B).

4. Arrangement de soupapes suivant la revendication 3, **caractérisé en ce que** la surface de contre-appui (19) de l'élément d'actionnement (B) est formée par le fond d'un évidement (24) dans lequel plonge l'actionneur (A) avec un jeu latéral.

5. Arrangement de soupapes suivant la revendication 1, **caractérisé en ce que** la butée d'alignement (C) présente au moins une surface (21) dirigée perpendiculairement à la direction de déplacement des organes de fermeture (13, 15).

6. Arrangement de soupapes suivant la revendication 1, **caractérisé en ce que** la butée d'alignement (C) se compose de plusieurs zones d'appui distantes, de préférence planes.

7. Arrangement de soupapes suivant la revendication 2, **caractérisé en ce que** le corps (22) de l'élément d'actionnement (B) présente un compartiment (25) dont le fond (21) forme la butée d'alignement (C) avec laquelle l'élément d'actionnement (B) peut venir en contact direct, ou présente celle-ci.

8. Arrangement de soupapes suivant l'une au moins des revendications précédentes, **caractérisé en ce que** l'élément d'actionnement (B) présente au moins une surface antagoniste (20) ou plusieurs appuis antagonistes pour la coopération avec la butée d'alignement (C).

9. Arrangement de soupapes suivant la revendication 1, **caractérisé en ce que** des poussoirs de transmission (26) sont prévus entre l'élément d'actionnement et les organes de soupape (13, 15), et que les poussoirs de transmission (26) sont orientés sur la butée d'alignement plane (C) prévue sur les unités de soupape (E1, E2) ou sur leurs corps.

10. Arrangement de soupapes suivant la revendication 9, **caractérisé en ce que** les poussoirs de transmission (26) s'engagent avec un jeu latéral dans des trous borgnes (28) de l'élément d'actionnement.
